(19) Europäisches Patentamt
European Patent Office
Office européen des brevets

(11) **EP 3 341 153 B1**

(12) **EUROPÄISCHE PATENTSCHRIFT**

(45) Veröffentlichungstag und Bekanntmachung des Hinweises auf die Patenterteilung:
**11.05.2022   Patentblatt 2022/19**

(21) Anmeldenummer: **16766490.3**

(22) Anmeldetag: **25.08.2016**

(51) Internationale Patentklassifikation (IPC):
*B23K 26/00* (2014.01)    *B23K 26/067* (2006.01)
*B23K 26/073* (2006.01)    *B23K 26/0622* (2014.01)
*B23K 26/066* (2014.01)

(52) Gemeinsame Patentklassifikation (CPC):
**B23K 26/0006; B23K 26/0624; B23K 26/066; B23K 26/067; B23K 26/0738; B23K 26/355; B23K 26/359**

(86) Internationale Anmeldenummer:
**PCT/EP2016/070029**

(87) Internationale Veröffentlichungsnummer:
**WO 2017/032818 (02.03.2017 Gazette 2017/09)**

(54) **VORRICHTUNG UND VERFAHREN ZUR ABLATIVER HERSTELLUNG EINER PERIODISCHEN LINIENSTRUKTUR AN EINEM WERKSTÜCK**

ABLATIVE PRODUCTION DEVICE AND METHOD FOR A PERIODIC LINE STRUCTURE ON A WORKPIECE

DISPOSITIF ET PROCÉDÉ PERMETTANT LA FABRICATION PAR ABLATION D'UNE STRUCTURE LINÉAIRE PÉRIODIQUE SUR UNE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2015   DE 102015216342**

(43) Veröffentlichungstag der Anmeldung:
**04.07.2018   Patentblatt 2018/27**

(73) Patentinhaber: **Institut für Nanophotonik Göttingen e.V.**
**37077 Göttingen (DE)**

(72) Erfinder:
• **IHLEMANN, Juergen**
**37077 Goettingen (DE)**

• **MEINERTZ, Joerg**
**37085 Goettingen (DE)**
• **STARK, Lars Henning**
**07745 Jena (DE)**

(74) Vertreter: **Wichmann, Hendrik**
**Wuesthoff & Wuesthoff**
**Patentanwälte PartG mbB**
**Schweigerstraße 2**
**81541 München (DE)**

(56) Entgegenhaltungen:
**CA-A1- 2 281 039    US-A- 3 742 182**
**US-B1- 6 795 198**

## Beschreibung

### Technisches Gebiet

Eine Technik zur Herstellung von periodischen Strukturen mittels elektromagnetischer Strahlung wird beschrieben. Insbesondere sind, ohne darauf beschränkt zu sein, eine Vorrichtung gemäß dem Oberbegriff des Anspruchs 1 (siehe z.B. CA 2 281 039 A1), und ein Verfahren zur Herstellung periodischer Linienstrukturen durch Ablation beschrieben.

### Stand der Technik

Durch die Strukturierung von Oberflächen können Oberflächenbereiche visuell oder haptisch gekennzeichnet werden. Ferner können diffraktive Strukturen je nach Blickwinkel unterschiedlich gefärbt erscheinen oder einen Farbverlauf erzeugen. Neben dekorativen Zwecken können strukturierte Oberflächen auch schmutzabweisend sein, beispielsweise entnetzend.

Das Dokument "Micron and Sub-Micron Gratings on Glass by UV Laser Ablation", J. Meinertz et al., Physics Procedia, Band 41, Seiten 708-712, zur Konferenz "Lasers in Manufacturing 2013" beschreibt eine herkömmliche Erzeugung paralleler Linien mittels eines Beugungsgitters. Jedoch geht ein erheblicher Teil der Strahlungsleistung eines Bearbeitungslasers am Beugungsgitter verloren. Zudem blendet eine Schwarzschild-Optik mit dem Hauptmaximum des Beugungsgitters einen weiteren Großteil der Strahlungsleistung aus.

Ferner ist aus der US 2009/0046757 eine Laserbestrahlungsvorrichtung bekannt, mittels welcher Positionen von bei der Laserkristallisation erzeugten Kristall-Korngrenzen gesteuert werden können.

### Abriss

Somit ist eine mögliche Aufgabe der vorliegenden Erfindung, eine Technik zur effizienteren Herstellung von Mikrostrukturen bereitzustellen.

Gemäß einem Aspekt ist eine Vorrichtung zur ablativen Herstellung einer periodischen Linienstruktur an einem Werkstück bereitgestellt. Die Vorrichtung umfasst einen gepulsten Laser zur Erzeugung ablativen Lichts; eine im Strahlengang des ablativen Lichts angeordnete Phasenmaske, die dazu ausgebildet ist, durch Interferenz eine Vielzahl äquidistanter paralleler Linien in einer Gegenstandsebene zu erzeugen und eine zur optischen Achse parallele Beugungsordnung zu unterdrücken, wobei die optische Achse senkrecht zur Gegenstandsebene ist; eine auf der optischen Achse angeordnete Abbildungsoptik mit einer parallel der Linien ausgerichteten Zylinderlinse, die dazu ausgebildet ist, die Gegenstandsebene in eine Bildebene abzubilden, wobei die Abbildungsoptik senkrecht zu den äquidistanten parallelen Linien verkleinert; und eine Halterung, die dazu ausgebildet ist, das Werkstück in der Bildebene anzuordnen.

Die abgebildeten äquidistanten parallelen Linien können die periodische Linienstruktur am Werkstück durch Ablation herstellen. Die periodische Linienstruktur am Werkstück kann lokal oder abschnittsweise periodisch sein. Die Herstellung kann Resultat mehrerer Pulse des ablativen Lichts sein. Beispielsweise kann die periodische Linienstruktur in einem zusammenhängenden Bereich oder in mehreren jeweils zusammenhängenden Bereichen am Werkstück hergestellt werden.

Die Bildebene kann senkrecht zur optischen Achse sein. Die Gegenstandsebene und die Bildebene können parallel sein.

Eine Richtung der äquidistanten parallelen Linien definiert eine Längsrichtung. Die optische Achse und die Längsrichtung definieren eine Symmetrieebene. Eine Richtung senkrecht zur Symmetrieebene definiert eine Querrichtung.

Strahlen können (z.B. für eine Ebene senkrecht zur optischen Achse) durch einen Winkel $\theta$ zwischen Strahl und optischer Achse (oder Symmetrieebene) beschrieben werden. Alternativ oder ergänzend können Strahlen (z.B. für eine Ebene senkrecht zur optischen Achse) durch einen Abstand $s$ (z.B. in Querrichtung) zwischen Strahl und optischer Achse (oder Symmetrieebene) beschrieben werden.

Die Phasenmaske kann das auf sie einfallende Licht des Lasers hinsichtlich seiner Phase in der Gegenstandsebene modulieren. Die Phasenmaske kann in Querrichtung dem einfallenden Licht einen Phasenversatz gemäß einem Rechteckprofil aufmodulieren. Die Phasenmaske kann in Längsrichtung (für jeweils jede Querrichtung) einen unveränderlichen Phasenversatz aufweisen.

Die abgebildeten Linien können durch Interferenz erzeugt sein. Die abgebildeten Linien können in der Bildebene durch Interferenz zweier Strahlen (eine 2-Strahlinterferenz) erzeugt sein. Die Phasenmaske kann die zwei Strahlen erzeugen. Jeder der Strahlen kann jeweils einer Beugungsordnung entsprechen. Die (unterdrückte) zur optischen Achse parallele Beugungsordnung wird auch als "achsnahes" Licht bezeichnet. Beugungsordnungen, die nicht parallel zur optischen Achse sind, werden auch als "achsfernes" Licht bezeichnet.

Beispielsweise können die zwei interferierenden Strahlen (beispielsweise die von der Abbildungsoptik erfassten nicht-unterdrückten Beugungsordnungen) mindestens 75%, beispielsweise 80% bis 90%, des Lichts (z.B. hinsichtlich der gesamten Strahlungsleistung nach der Phasenmaske oder hinsichtlich der Laserleistung) umfassen. Alternativ oder ergänzend kann ein Anteil des achsnahen Lichts kleiner als 10%, kleiner als 5% oder kleiner als 1% sein (z.B. hinsichtlich der gesamten Strahlungsleistung nach der Phasenmaske oder hinsichtlich der Laserleistung). Die Phasenmaske kann ermöglichen, möglichst viel Lichtleistung im achsfernen Licht (in den Nutzordnungen) für eine effiziente Nutzung des ablativen Lichts bereitzustellen.

Durch den geringen Anteil des achsnahen Lichts kann eine kontrastreiche Linienstruktur ermöglicht sein. Optional kann zwischen Phasenmaske und Abbildungsoptik, z.B. direkt an der Abbildungsoptik, eine Blende (oder ein Spiegel) zum Blockieren (bzw. zum Herausreflektieren aus dem Strahlengang) des achsnahen Lichts angeordnet sein. Die beiden Strahlen können zwischen Phasenmaske und Abbildungsoptik in einem Bereich vor der Abbildungsoptik nicht überlappen. Die Blende oder der Spiegel können in dem Bereich angeordnet sein.

Ein zumindest überwiegender Anteil des achsfernen Lichts kann ein Auflösungsvermögen der Abbildung erhöhen. Beispielsweise können feinere Linienstrukturen hergestellt werden. Alternativ oder ergänzend kann die Unterdrückung des achsnahen Lichts eine Schärfentiefe der Abbildung erhöhen. Die Schärfentiefe kann 50 $\mu$m bis 250 $\mu$m, beispielsweise 100 $\mu$m sein. Alternativ oder ergänzend kann die Unterdrückung des achsnahen Lichts und/oder das Überwiegen des achsfernen Lichts den Einfluss einer geometrischen (z.B. zylindrischen oder sphärischen) Aberration der Zylinderlinse auf die Abbildung der äquidistanten Linien verringern oder verhindern.

Die Gegenstandsebene kann im Wesentlichen einer Ebene der Phasenmaske entsprechen und/oder in einem Talbot-Bereich der Phasenmaske liegen.

Die Abbildungsoptik kann die Vielzahl äquidistanter paralleler Linien in die Bildebene abbilden. Die Abbildungsoptik kann zur verkleinernden Abbildung ausgebildet sein. Die Abbildung kann dazu ausgebildet sein, Abstände in der Querrichtung zu verkleinern. Ein Abstand der abgebildeten Linien in der Bildebene kann kleiner sein als der Abstand der äquidistanten Linien in der Gegenstandsebene.

Die Abbildungsoptik kann weitere optische Elemente (beispielsweise Linsen) umfassen. Beispielsweise kann die Abbildungsoptik ein Dublett zweier Zylinderlinsen mit entsprechend kombinierter Brechkraft umfassen.

Die Phasenmaske kann Lichteffizient sein. Die Phasenmaske kann einen Transmissionsgrad von mindestens 75%, beispielsweise 80% bis 90%, ausweisen. Die Lichtausbeute der Phasenmaske kann erheblich höher sein als die Lichtausbeute eines Beugungsgitters, beispielsweise ein Mehrfaches. Ferner kann der Einsatz der Phasenmaske das achsnahe Licht durch Interferenz unterdrücken, ohne ein Hauptmaximum zu blockieren oder zu absorbieren. Der hohe Transmissionsgrad kann einer Erwärmung oder Alterung der Phasenmaske entgegenwirken.

Der Laser und/oder die Phasenmaske können dazu ausgebildet sein, die Vielzahl äquidistanter Linien in der Gegenstandsebene über eine Weite X zu erzeugen. Die von der Phasenmaske ausgehenden (z.B. die zumindest im Wesentlichen nicht-unterdrückten) Beugungsordnungen können in der Abbildungsoptik über die gesamte Weite X von der optischen Achse beabstandet sein. Beispielsweise können die von der Abbildungsoptik erfassten (z.B. die zumindest im Wesentlichen nicht-unterdrückten) Beugungsordnungen um mehr als die Weite X von der optischen Achse beabstandet sein.

Der Laser und/oder die Phasenmaske können dazu ausgebildet sein, die Vielzahl äquidistanter Linien in der Gegenstandsebene über eine erste Weite zu erzeugen. Die Beugungsordnungen können in der Abbildungsoptik über eine mit der ersten Weite korrespondierende zweite Weite von der optischen Achse beabstandet sein. Die erste Weite kann sich quer zur optischen Achse in der Gegenstandsebene erstrecken.

Die zweite Weite kann sich quer zur optischen Achse am Ort der Abbildungsoptik erstrecken, beispielsweise in einer Abbildungsebene oder Hauptebene der Abbildungsoptik. Die zweite Weite kann (z.B. bei einem im Wesentlichen kollimierten Strahl des ablativen Lichts) im Wesentlichen gleich der ersten Weite sein. Die zweite Weite kann (z.B. bei einem divergenten Strahl des ablativen Lichts) durch Strahldivergenz im Vergleich zur ersten Weite vergrößert sein. Die Korrespondenz der zweiten Weite mit der ersten Weite kann in einer Proportionalität der Weiten bestehen. Der Proportionalitätsfaktor kann gleich 1 oder größer als 1 sein.

Das Licht des Lasers kann zur Ablation ausgebildet sein. Das Licht kann dazu ausgebildet sein, eine lokalisierte Abtragung oder Veränderung von Material durch hohe Hitzeeinwirkung und/oder Plasmabildung zu verursachen. Das ablative Licht kann dazu ausgebildet sein, in der Bildebene eine Ablation an dem in der Halterung aufgenommenen Werkstücks zu bewirken. Eine Oberfläche oder eine Schnittebene des Werkstücks kann mittels der Halterung in der Bildebene angeordnet sein.

Das Werkstück kann Glas umfassen und/oder ein Glaskörper sein. Die Oberfläche kann eine Glasoberfläche sein. Das Glas kann ein Silikat-Glas sein.

Die ablative Wirkung des Lichts kann durch dessen Wellenlänge, Pulsdauer, Pulsrate (oder Repetitionsrate), Pulsenergie, Strahlungsleistung, Fluenz und/oder Intensität bestimmt sein. Die Strahlungsleistung kann die Pulsleistung betreffen. Die Pulsleistung kann das Verhältnis von Pulsenergie und Pulsdauer sein. Die Fluenz kann die Pulsenergie pro wirksamer Fläche sein. Die Intensität kann die Pulsleistung pro wirksamer Fläche sein.

Die interferierenden Strahlen können die niedrigsten nicht-unterdrückten Beugungsordnungen sein. Die Beabstandung der Strahlen kann dadurch erreicht sein, dass sich die Strahlen in der Abbildungsoptik nicht überlappen.

Das Werkstück kann in der Bildebene senkrecht zu den Linien beweglich angeordnet sein. Beispielsweise können großflächig Strukturen hergestellt werden. Die großflächigen Strukturen können durch linengenaue Fortsetzung verschiedener Ablationspulse zusammengesetzt sein. Alternativ oder in Kombination können die großflächigen Strukturen durch auf der Oberfläche des Werkstücks im Wesentlichen statistisch verteilte Ablationspulse zusammengesetzt sein. In beiden Fällen können die Ablationspulse auf der Oberfläche des Werkstücks überlappen.

Die Halterung kann dazu ausgebildet sein, das Werkstück parallel zur Bildebene, und beispielsweise senkrecht zu den abgebildeten äquidistanten Linien, mit einer stetigen Vorschubgeschwindigkeit zu verschieben. Beispielsweise können homogene großflächige Strukturen hergestellt werden. Die stetige Vorschubgeschwindigkeit kann im Wesentlichen und/oder zumindest zeitweise konstant sein.

Eine Repetitionsrate $r$ des gepulsten Lasers und die Vorschubgeschwindigkeit $v$ der Halterung können synchronisiert sein. Beispielsweise kann, zumindest zeitweise, zwischen der Repetitionsrate $r$ und der Vorschubgeschwindigkeit $v$ der Zusammenhang $v = r \cdot b \cdot n$ für ein ganzzahliges $n$ bestehen. Darin kann $b$ eine Periodizität der abgebildeten äquidistanten Linien sein.

Die Repetitionsrate kann 10 Hz bis 5 kHz, z.B. 100 Hz bis 1 kHz betragen. Die Pulsdauer kann 10 ns bis 100 ns, beispielsweise 20 ns, betragen.

Die von aufeinanderfolgenden Pulsen erzeugte Linienstruktur kann überlappen. Ein Vorschub je Puls, $b \cdot n = v/r$, kann kleiner als eine bildseitige Weite, $Y$, sein. Beispielsweise kann der Vorschub $0.9 \cdot Y$ bis $1.0 \cdot Y$ betragen.

Alternativ oder ergänzend kann der Vorschub ein Bruchteil der bildseitigen Weite $Y$ sein. Der Vorschub $b \cdot n$ kann $Y/m$ für $m = 2, 3, 4, ...$ betragen. So kann durch Mehrfachanwendung des ablativen Lichts eine gewünschte Ausdehnung der Linienstruktur im Werkstück, beispielsweise parallel zur optischen Achse, erreicht werden.

Die Linienstruktur kann unter Einhaltung der bildseitigen Periodizität $b$ bis zu einer gewünschten Ausdehnung fortgesetzt werden. Ferner kann die Linienstruktur durch mäanderförmiges Verfahren zu einer gewünschten Fläche fortgesetzt werden.

Alternativ oder ergänzend kann hinter der Abbildungsoptik, oder als Teil der Abbildungsoptik, ein Scanner angeordnet sein. Der Scanner kann dazu ausgebildet sein, die abgebildeten äquidistanten Linien in einer oder zwei Dimensionen zu versetzen, beispielsweise zur vorgenannten Fortsetzung der periodischen Linienstruktur.

Die Phasenmaske kann dazu ausgebildet sein, alle geradzahligen Beugungsordnungen, einschließlich der nullten Ordnung, zu unterdrücken.

Die nicht-unterdrückten Beugungsordnungen können symmetrisch zur optischen Achse verlaufen. Alternativ oder ergänzend kann die Abbildungsoptik symmetrisch zur optischen Achse angeordnet sein. Die Abbildungsoptik kann zu einer von der Phasenmaske (oder den äquidistanten Linien) und der optischen Achse definierten Ebene spiegel-symmetrisch sein.

Die Abbildungsoptik kann zwei nicht-unterdrückte Beugungsordnungen erfassen, beispielsweise die beiden ersten Beugungsordnungen. Die unterdrückte Beugungsordnung kann die nullte Beugungsordnung sein. Die Phasenmaske kann in einer "+1/-1"-Konfiguration angeordnet sein (z.B. bezüglich des Lasers oder dessen Strahlengangs). Ferner kann die Phasenmaske eine zweite Beugungsordnung, z.B. jede geradzahligen Beugungsordnung, unterdrücken. Die "+1/-1"-Konfiguration kann eine übereinstimmende Leistung oder Intensität der beiden interferierenden Strahlen des achsfernen Lichts ermöglichen.

Alternativ kann die unterdrückte Beugungsordnung eine erste Beugungsordnung sein. Die Phasenmaske kann (z.B. bezüglich des Lasers oder dessen Strahlengangs) in einer "0/-1"-Konfiguration angeordnet sein. Die "0/-1"-Konfiguration kann eine besonders effiziente Unterdrückung des achsnahen Lichts ermöglichen.

In allen Konfigurationen kann eine dritte (oder höhere) Beugungsordnung von vernachlässigbar geringer Intensität sein, und/oder (beispielsweise durch eine laterale Ausdehnung der Abbildungsoptik) geometrisch ausgeschlossen (z.B. blockiert) sein.

Die Abbildungsoptik kann in nur einer Dimension abbilden. Die Abbildungsoptik kann senkrecht zu den äquidistanten Linien abbilden.

Die äquidistanten Linien in der Gegenstandsebene und die abgebildeten äquidistanten Linien können eine im Wesentlichen gleiche Länge ausweisen. Die äquidistanten Linien in der Gegenstandsebene und/oder die abgebildeten äquidistanten Linien in der Bildebene können eine Länge von etwa 10 mm bis etwa 50 mm, beispielsweise 20 mm, aufweisen.

Die Abbildungsoptik kann die Vielzahl äquidistanter Linien in die Bildebene abbilden. Die Abbildung kann verkleinern. Die Abbildungsoptik verkleinert (in der Bildebene) senkrecht zu den äquidistanten Linien. Ein Abstand der abgebildeten Linien kann kleiner sein als der Abstand der äquidistanten Linien in der Gegenstandsebene. Ein Abstand der abgebildeten Linien (d.h., deren Periodizität $b$) kann kleiner als ein Auflösungsvermögen des menschlichen Auges sein.

Ein Faktor der Verkleinerung, $Y/X = b/g$, kann im Bereich 1/5 bis 1/100, beispielsweise bei 1/10 oder bei 1/80, betragen. Eine Periodizität $g$ der äquidistanten Linien in der Gegenstandsebene kann 2 $\mu$m bis 200 $\mu$m, beispielsweise 25 $\mu$m, betragen. Die Periodizität der äquidistanten Linien in der Gegenstandsebene kann $g = d$ oder $g = d / 2$ sein bei einer Periodizität $d$ der Phasenmaske. Der Satz abgebildeter äquidistanter Linien kann eine bildseitige Weite $Y$ in der Bildebene von 10 $\mu$m bis 1 mm, beispielsweise 100 $\mu$m, aufweisen.

Die Periodizität $d$ der Phasenmaske kann 5 $\mu$m bis 500 $\mu$m betragen, beispielsweise 50 $\mu$m. Die Periodizität $b$ der abgebildeten äquidistanten Linien kann 0,5 $\mu$m bis 25 $\mu$m betragen, beispielsweise 2,5 $\mu$m oder 5 $\mu$m.

Pro Puls können 10 bis 1000, beispielsweise 50, 80 bis 100, 200 oder 500 äquidistante Linien abgebildet werden.

Die gemäß den abgebildeten parallelen Linien hergestellte periodische Linienstruktur kann als ein Reliefgitter auf der Glasoberfläche diffusiv streuend und/oder diffraktiv reflektierend wirken, beispielsweise für sichtbares Licht.

Nur wenige äußere, von der optischen Achse beabstandete Zonen der Zylinderlinse können durch die nicht-unterdrückten Beugungsordnungen ausgeleuchtet werden und/oder zur Abbildung in der Bildebene beitragen.

Ferner kann die Vorrichtung eine zwischen der Abbildungsoptik und der Bildebene angeordnete Amplitudenmaske aufweisen. Die Amplitudenmaske kann von der Bildebene beabstandet sein. Die Amplitudenmaske kann zusammen oder parallel mit dem Werkstück verschoben werden.

Gemäß einem weiteren Aspekt der Erfindung (siehe Anspruch 10) ist ein Verfahren zur ablativen Herstellung einer periodischen Linienstruktur auf oder in einem Werkstück bereitgestellt. Das Verfahren umfasst den Schritt des Erzeugens ablativen Lichts mittels eines gepulsten Lasers; den Schritt des Anordnens einer Phasenmaske im Strahlengang des ablativen Lichts zur Erzeugung einer Vielzahl äquidistanter Linien in einer Gegenstandsebene und zur Unterdrückung einer zur optischen Achse parallelen Beugungsordnung durch Interferenz, wobei die optische Achse senkrecht zur Gegenstandsebene ist; den Schritt des Abbildens der Gegenstandsebene in eine Bildebene mittels einer auf der optischen Achse angeordneten und parallel der Linien ausgerichteten Zylinderlinse; und den Schritt des Anordnens des Werkstücks in der Bildebene.

**Kurze Beschreibung der Zeichnungen**

Weitere Merkmale der Technik sind nachstehend anhand von Ausführungsbeispielen unter Bezugnahme auf die beigefügten Zeichnungen beschrieben, wobei:

Fig. 1     zeigt ein schematisches Blockdiagramm einer Vorrichtung zur Herstellung einer periodischen Linienstruktur an einem Werkstück;

Fig. 2     zeigt schematisch eine Verteilung der Leistung des von einer Phasenmaske ausgehenden Lichts hinsichtlich Winkel und Abstand zur optischen Achse;

Fig. 3     zeigt schematisch ein Ausführungsbeispiel der Vorrichtung der Fig. 1;

Fig. 4     zeigt eine erste Konfiguration einer Phasenmaske für die Vorrichtung der Fign. 1 und 3 oder die Verteilung der Fig. 2; und

Fig. 5     zeigt eine zweite Konfiguration einer Phasenmaske für die Vorrichtung der Fign. 1 und 3 oder die Verteilung der Fig. 2.

**Ausführliche Beschreibung**

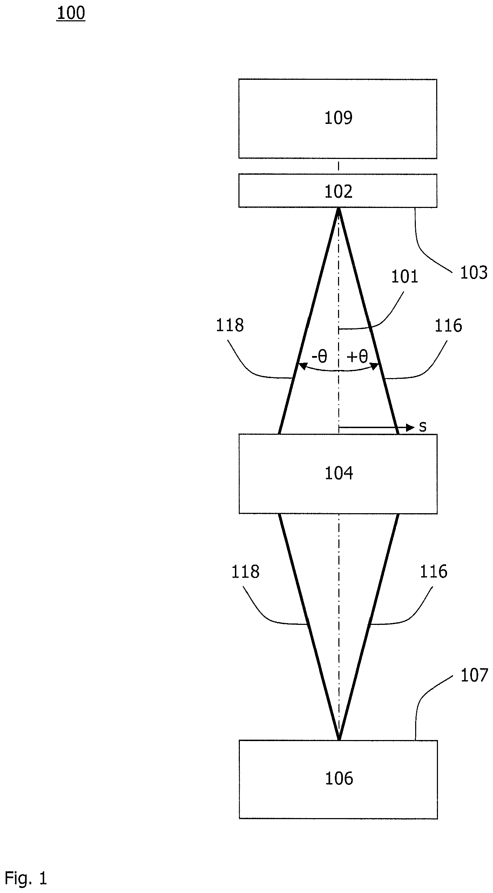

Fig. 1 zeigt eine allgemein mit Bezugszeichen 100 bezeichnete Vorrichtung zur Herstellung einer periodischen Linienstruktur. Die Vorrichtung 100 umfasst einen gepulsten Laser 109 zur Erzeugung ablativen Lichts 110, eine im Strahlengang des ablativen Lichts 110 angeordnete Phasenmaske 102 mit einer Gegenstandsebene 103, eine auf einer optischen Achse 101 angeordnete Abbildungsoptik 104, und eine Halterung 106, um ein Werkstück 108 in einer Bildebene 107 der Abbildungsoptik 104 anzuordnen.

Durch Interferenz erzeugt die Phasenmaske 102 eine erste Linienstruktur in der Gegenstandsebene 103. Die Gegenstandsebene 103 steht senkrecht zur optischen Achse 101. Die Gegenstandsebene ist im Nahfeld der Phasenmaske 102 auf der vom Laser 109 abgewandten Seite der Phasenmaske 102.

Die Gegenstandsebene 103 kann eine Talbot-Länge oder eine halbe Talbot-Länge (oder ein ganzzahliges Vielfaches der halben oder der ganzen Talbot-Länge) von der Ebene der Phasenmaske beabstandet sein.

Im Fernfeld der Phasenmaske 102 unterdrückt die Interferenz eine zur optischen Achse 101 parallele Beugungsordnung. Von der Phasenmaske 102 gehen (zumindest im Wesentlichen) zwei Strahlen 116 und 118 aus. Die Strahlen 116 und 118 verlaufen symmetrisch zur optischen Achse 101.

Die Abbildungsoptik 104 bildet mittels der positiven Brechkraft einer Zylinderlinse die Gegenstandsebene 103 in die Bildebene 107 ab. Optional umfasst die Abbildungsoptik 104 weitere optische Elemente, beispielsweise jeweils mit positiver Brechkraft. Durch ein Dublett mit zwei Zylinderlinsen können, bei gleicher kombinierter Brechkraft, Abbildungsfehler verringert sein im Vergleich zu einer einzelnen Zylinderlinse entsprechender Brechkraft. Das Dublett kann asymmetrisch sein. Die Zylinderlinsen können jeweils mit einer konvexen Seite zur Phasenmaske 102 ausgerichtet sein.

Die Gegenstandsebene 103, die Abbildungsoptik 104 und die Bildebene 107 sind zueinander so angeordnet, dass die erste Linienstruktur zu einer verkleinerten zweiten Linienstruktur abgebildet wird. Die zweite Linienstruktur entsteht in der Gegenstandsebene 107 durch Interferenz der zwei Strahlen 116 und 118.

Das ablative Licht kann monochromatisch sein. Das ablative Licht kann ultraviolettes Licht umfassen. Der gepulste Laser 109 kann ultraviolettes Licht erzeugen. Der gepulste Laser 109 kann ein Excimerlaser, beispielsweise ein Argon-Fluorid-Laser, sein. Eine Wellenlänge des Lichts kann im Bereich von 126 nm bis 351 nm sein. Die Wellenlänge des Lichts kann etwa 193 nm betragen.

Die erste Linienstruktur und die zweite Linienstruktur enthalten jeweils äquidistante parallele Linien, d.h., Maxima der Intensität des Lichts. Die Linien sind senkrecht zum Zeichnungsblatt der Fig. 1 und definieren eine Längsrichtung. Die Längsrichtung und die optische Achse 101 spannen eine Symmetrieebene auf. Bezüglich der Symmetrieebene sind ein Winkel θ und ein Abstand s für jeden der Strahlen 116 und 118 definiert, z.B. in einer Ebene senkrecht zur optischen Achse bei der Abbildungsoptik 104. Winkel θ und/oder Abstand s können auf gegenüberliegenden Seiten der Symmetrieebene entgegengesetzte Vorzeichen haben.

Die Abbildungsoptik 104 kann dazu ausgebildet sein, eine Kohärenz und/oder eine relative Phasenlage der zwei Strahlen 116 und 118 zu erhalten. Eine optische Weglänge der Abbildungsoptik 104 kann (beispielsweise aufgrund von unkorrigierten optischen Elementen, z.B. aufgrund der Zylinderlinse) vom Winkel θ der auf die Abbildungsoptik einfallenden Strahlen 116 und 118 abhängen.

Die Phasenmaske 102 kann das ablative Licht (oder zumindest ein Großteil dessen) auf diskrete Winkel verteilen, z.B. auf zwei definierte Winkel entsprechend der zwei Strahlen 116 und 118. Die Abbildungsoptik 104 kann (z.B. aufgrund der Beleuchtung durch die Phasenmaske und/oder aufgrund von einer oder mehrerer Blenden) nur für die diskreten Winkel genutzt sein. Dadurch kann ein für Schärfe und/oder Kontrast nachteiliger Einfluss der Winkelabhängigkeit der optischen Weglänge vermieden werden. Eine Korrektur der Abbildungsoptik, z.B. hinsichtlich der Winkelabhängigkeit, kann unterbleiben.

Die zwei Strahlen 116 und 118 können symmetrisch zur Symmetrieebene sein. Die zwei Winkel der Strahlen 116 und 118 können betragsgleich sein. Dadurch können die zwei Strahlen 116 und 118 dieselbe optische Weglänge zwischen Phasenmaske 102 und Werkstück 106 zurücklegen für eine kontrastreiche Interferenz.

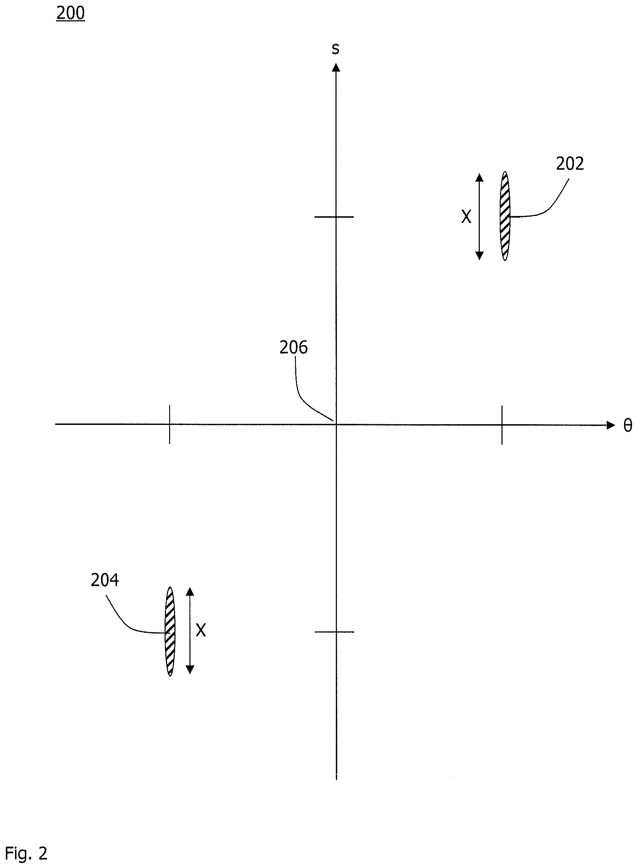

Fig. 2 zeigt schematisch eine Leistungsverteilung 200 des ablativen Lichts in einer Ebene senkrecht zur optischen Achse 101 vor oder in der Abbildungsoptik 104. Die Verteilung 200 der Leistung des Lichts ist bezüglich des Winkels θ zur Symmetrieebene und des Abstands s zur Symmetrieebene schematisch dargestellt. Die Verteilung 200 zeigt eine diskretisierte Verteilung der Leistung bezüglich des Winkels zur Symmetrieebene.

Eine Beugungsordnung definiert einen scharfen Winkel θ>0 für die Leistung 202 des ersten Strahls 116. Eine andere Beugungsordnung definiert einen scharfen Winkel θ<0 für die Leistung 204 des ersten Strahls 118. In die Abbildungsoptik 104 gelangt (zumindest relativ zur Leistung des achsfernen Lichts 202 und 204) kein achsnahes Licht 206.

Die Zylinderlinse kann (z.B. in der Symmetrieebene) einen kreisförmigem Querschnitt aufweisen. Die Zylinderlinse ist nicht notwendigerweise (z.B. bezüglich geometrischer Abbildungsfehler) korrigiert. Aufgrund der diskreten Winkelverteilung 200 kann auf einen korrigierenden Azylinder in der Abbildungsoptik 104 verzichtet werden. Zumindest in Ausführungsbeispielen kann eine optische Weglänge der Abbildungsoptik (zumindest im Wesentlichen) nur vom Winkel der auf die Abbildungsoptik einfallenden Strahlen relativ zur optischen Achse oder zur Symmetrieebene abhängen. Die optische Weglänge der Abbildungsoptik kann (zumindest im Wesentlichen) unabhängig vom Abstand s zur optischen Achse 101 sein. Dadurch kann Licht der Phasenmaske über eine Weite X abgebildet werden, die mit der optischen Achse 101 überlappt.

Alternativ oder ergänzend kann die Weite X klein sein, beispielsweise kann die Weite X klein sein im Verhältnis zur Gegenstandsweite G. Alternativ oder ergänzend können die Strahlen 116 und 118 in der Abbildungsoptik 104 nicht überlappen, so dass die Weite X klein ist im Verhältnis zum Abstand s zur Symmetrieebene, wie schematisch für die Leistungsverteilung 200 gezeigt. Dadurch kann die Anforderung an die Abbildungsoptik 104 weiter reduziert werden. Beispielsweise können leichtere oder kostengünstigere Zylinderlinsen in der Abbildungsoptik 104 verwendet werden.

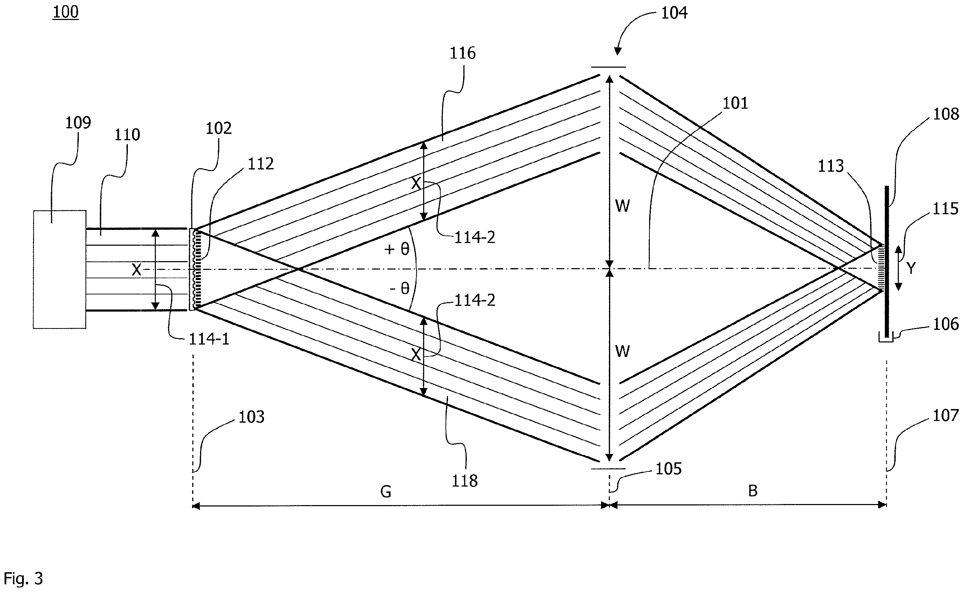

Fig. 3 zeigt ein schematisches Schnittbild eines Ausführungsbeispiels der Vorrichtung 100. Die Ebene des in Fig. 3 gezeigten Schnittbilds ist parallel zur optischen Achse 101 und senkrecht zu den äquidistanten Linien 113.

Im in Fig. 3 gezeigten Ausführungsbeispiel der Vorrichtung 100 erzeugt die Phasenmaske 102 die erste Linienstruktur 112 in der Gegenstandsebene 103. Unabhängig davon ob die erste Linienstruktur 112 überhaupt vorliegt, sind die Strahlen 116 und 118 dazu ausgebildet, durch Überlagerung in der Bildebene 107 die ablative Linienstruktur 113 hervorzubringen.

Die Fig. 3 ist schematisch zugunsten der Übersichtlichkeit. Beispielsweise kann der Strahlenverlauf einen (in Fig. 3 nicht dargestellten) Zwischenfokus aufweisen, z.B. zwischen einer Abbildungsebene 105 und der Bildebene 107. Alternativ kann der Zwischenfokus bei konvergenten Strahlen 116 und 118 zwischen der Gegenstandsebene 103 und der Abbildungsebene 105 sein.

Im in Fig. 3 gezeigten Ausführungsbeispiel sind die beiden Strahlen 116 und 118 jeweils (zumindest näherungsweise) kollimierte Strahlen, beispielsweise indem die Strahlen 116 und 118 definierten Beugungsordnungen entsprechen, die von der Phasenmaske unter einem definierten Beugungswinkel θ zur optischen Achse emittiert werden. Die Weite X der Strahlen 116 und 118 beim Bezugszeichen 114-2 kann im Wesentlichen der vom Laser 109 beleuchteten Weite X beim Bezugszeichen 114-1 entsprechen.

Bei geringer Divergenz der Strahlen 116 und 118 kann die Weite X beim Bezugszeichen 114-2 größer als die beleuchtete Weite X beim Bezugszeichen 114-1 sein. Beispielsweise kann in der Abbildungsebene 105 (oder unmittelbar vor der Abbildungsoptik 104) die Weite X maximal 10% größer sein als die Weite X in der Gegenstandsebene 103 (oder unmittelbar hinter der Phasenmaske 102).

Die Strahlen 116 und 118 schließen mit der optischen Achse 101 eingangsseitig der Abbildungsoptik 104 (zumindest näherungsweise) einen definierten Winkel +θ bzw. - θ ein. Die Abbildung der Strahlen 116 und 118 mittels der Abbildungsoptik 104 nutz nur einen (zumindest näherungsweise) diskreten Winkelbereich. Zudem sind bei zur optischen Achse 101 symmetrischen Verlauf der Strahlen 116 und 118 und zur optischen Achse 101 symmetrischen Anordnung der Abbildungsoptik 104 die abgebildeten Winkel (zumindest näherungsweise) betragsgleich.

Eine Abbildung mit nur einem einzigen Winkelbetrag kann die Interferenz der abgebildeten Strahlen verbessern und/oder Anforderungen an die Abbildungsoptik 104 reduzieren. Beispielsweise kann eine besonders scharfe und/oder kontrastreiche Linienstruktur 113 ermöglicht sein, obwohl bei einer einfachen Zylinderlinse eine Verzerrung einer Wellenfront der Strahlen 116 und 118 zu erwarten wäre.

Die Linienstruktur 113 kann in der Bildebene 107 quer zu den äquidistanten Linien ein Rechteckprofil aufweisen. Eine hohe Schärfe der Abbildung kann steilen Flanken des Rechteckprofils entsprechen. Alternativ kann die Linienstruktur 113 eine sinusförmige Intensitätsverteilung in der Bildebene 107 quer zu den äquidistanten Linien aufweisen.

Bei hohem Kontrast können Intensitätsminima der Linienstruktur 113 im Wesentlichen strahlungsfrei sein, so dass in den Tälern der Intensitätsverteilung das Werkstück 108 unbearbeitet bleibt.

Fig. 3 zeigt ein Ausführungsbeispiel mit in der Abbildungsoptik getrennte Strahlen 116 und 118. Ein Abstand W der Strahlen 116 und 118 von der Symmetrieebene kann groß sein im Verhältnis zur Weite X der Strahlen 116 und 118.

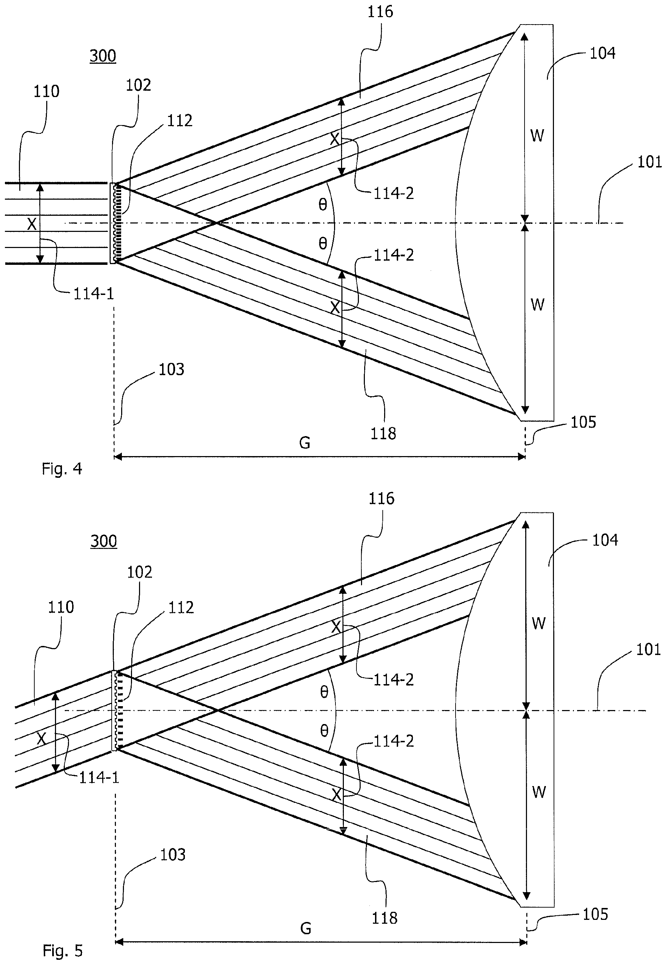

Die Fign. 4 und 5 zeigen einen Ausschnitt 300 der Vorrichtung 100 für Ausführungsbeispiele der Phasenmaske 102. Die Abbildungsoptik 104 umfasst einer parallel der Linien 112 ausgerichtete Zylinderlinse. Ein Radius der Zylinderlinse ist groß im Verhältnis zum Abstand W der Strahlen 116 und 118 von der Symmetrieebene in der Abbildungsebene 105. Die Zylinderlinse 104 ist nicht notwendigerweise azylindrisch korrigiert.

Fig. 4 zeigt eine erste Konfiguration der Phasenmaske 102, bei der die Strahlen 116 und 118 den beiden ersten Beugungsordnungen +1 und -1 entsprechen. Die erste Konfiguration kann eine symmetrische Verteilung der Leistung des ablativen Lichts 110 auf die zwei Strahlen 116 und 118 ermöglichen.

Fig. 5 zeigt eine zweite Konfiguration der Phasenmaske 102, bei welcher der Strahl 116 der nullten Beugungsordnung und der Strahl 118 einer ersten Beugungsordnung entsprechen. Die zweite Konfiguration kann eine vollständige Unterdrückung achsnahen Lichts ohne verlustbehaftete Blenden ermöglichen.

Die Zylinderlinse 104 ermöglicht eine ausgedehnte Bearbeitung des Werkstücks 108 in der Längsrichtung. Ein Bearbeitungsbereich wird ferner durch Verschiebung des Werkstücks mittels der Halterung 106 erweitert. Die Halterung 106 verschiebt das Werkstück 108 kontinuierlich in der Bildebene 107 bei ununterbrochenem Pulsbetrieb des Lasers 109. Alternativ oder ergänzend dreht die Halterung das Werkstück, beispielsweise um eine gekrümmte Oberfläche zu bearbeiten. Die Drehung erfolgt um den instantanen Normalenschnittpunkt des aktuellen Bearbeitungsbereichs.

Beispielsweise wird das Werkstück in die Querrichtung kontinuierlich verschoben, so dass bei jedem Puls des Lasers 109 in einem Überlappungsbereich der Bearbeitung mit einem durch den vorhergehenden Puls bearbeiteten Bereich die abgebildeten parallelen Linien deckungsgleich sind. Da das Produkt aus Pulsdauer und Verschiebungsgeschwindigkeit klein ist im Vergleich zur Breite der abgebildeten Linien können zeitaufwendige Anfahr- und Abbremsvorgänge vermieden werden.

Durch Verwendung der Phasenmaske 104 kann eine Fluenz des Lasers 109 nahezu vollständig zur Bearbeitung des Werkstücks 108 genutzt werden.

Das Werkstück 108 kann Glas umfassen. Die Technik kann zur Kennzeichnung oder Oberflächenbearbeitung von Kochfeldern mit Glaskeramik, Brillengläsern oder Primärverpackungen eingesetzt werden.

In jedem der Ausführungsbeispiele kann eine Amplitudenmaske zwischen Werkstück 108 und Abbildungsoptik 104, z.B. in der Bildebene 107, angeordnet sein. Die Amplitudenmaske kann eine aus der Linienstruktur zusammengesetzte Darstellung ermöglichen. Die Darstellung kann eine Grafik, einen Schriftzug, ein Piktogramm oder einen maschinenlesbaren Code umfassen. Der maschinenlesbare Code kann eindimensional strukturiert sein (z.B. als Strichcode) oder kann zweidimensional strukturiert sein (z.B. als QR-Code).

**Patentansprüche**

1. Vorrichtung (100) zur ablativen Herstellung einer periodischen Linienstruktur an einem Werkstück (108), umfassend:

   einen gepulsten Laser (109), der dazu ausgebildet ist, ablatives Licht (110) zu erzeugen; eine im Strahlengang des ablativen Lichts (110) angeordnete Phasenmaske (102), die dazu ausgebildet ist, durch Interferenz eine Vielzahl äquidistanter paralleler Linien (112) in einer Gegenstandsebene (103) zu erzeugen und eine zur optischen Achse (101) parallele Beugungsordnung zu unterdrücken, wobei die optische Achse (101) senkrecht zur Gegenstandsebene (103) ist; **gekennzeichnet durch** folgende Merkmale: eine auf der optischen Achse (101) angeordnete Abbildungsoptik (104) mit einer parallel der Linien (112) ausgerichteten Zylinderlinse, die dazu ausgebildet ist, die Gegenstandsebene (103) in eine Bildebene (107) abzubilden, wobei die Abbildungsoptik (104) senkrecht zu den äquidistanten parallelen Linien (112) verkleinert; und eine Halterung (106), die dazu ausgebildet ist, das Werkstück (108) in der Bildebene (107) anzuordnen.

2. Vorrichtung gemäß Anspruch 1, wobei die nicht-unterdrückten Beugungsordnungen (116, 118) diskrete Winkel mit der optischen Achse (101) einschließen und die Zylinderlinse keine azylindrische Korrektur aufweist.

3. Vorrichtung gemäß Anspruch 1 oder 2, wobei die nicht-unterdrückten Beugungsordnungen (116, 118) und die Abbildungsoptik (104) symmetrisch zur optischen Achse (101) liegen.

4. Vorrichtung gemäß einem der Ansprüche 1 bis 3, wobei die Phasenmaske dazu ausgebildet ist, die Vielzahl äquidistanter paralleler Linien (112) in der Gegenstandsebene (103) über eine erste Weite (114-1) zu erzeugen, und wobei die Abbildungsoptik (104) auf der optischen Achse (101) angeordnete ist, so dass nicht-unterdrückte Beugungsordnungen (116, 118) in der Abbildungsoptik (104) über eine mit der ersten Weite (114-1) korrespondierende zweite Weite (114-2) von der optischen Achse (101) beabstandet sind.

5. Vorrichtung gemäß einem der Ansprüche 1 bis 4, wobei das Werkstück in der Bildebene (107) senkrecht der Linien (112, 113) beweglich angeordnet ist.

6. Vorrichtung gemäß einem der Ansprüche 1 bis 5, wobei die Halterung (106) dazu ausgebildet ist, das Werkstück (108) parallel zur Bildebene (107) und senkrecht zu den abgebildeten äquidistanten Linien (113) mit einer stetigen Vorschubgeschwindigkeit zu verschieben.

7. Vorrichtung gemäß Anspruch 6, wobei eine Repetitionsrate, r, des gepulsten Lasers (109) und die Vorschubgeschwindigkeit, v, der Halterung (106) synchronisiert sind, so dass

$$v = r \cdot b \cdot n \text{ für ein ganzzahliges } n,$$

wobei $b$ eine Periodizität der abgebildeten äquidistanten Linien (113) ist.

8. Vorrichtung gemäß Anspruch 6 oder 7, wobei ein Vorschub zwischen zwei aufeinanderfolgenden Pulsen ein ganzzahliger Bruchteil einer bildseitigen Weite (115) ist.

9. Vorrichtung gemäß einem der Ansprüche 1 bis 8, ferner umfassend:

eine zwischen der Abbildungsoptik (104) und der Bildebene (107) angeordnete Amplitudenmaske.

10. Verfahren zur ablativen Herstellung einer periodischen Linienstruktur an einem Werkstück (108), umfassend:

Erzeugen ablativen Lichts (110) mittels eines gepulsten Lasers (109);
Anordnen einer Phasenmaske (102) im Strahlengang des ablativen Lichts (110) zur Erzeugung einer Vielzahl äquidistanter paralleler Linien (112) in einer Gegenstandsebene (103) und zur Unterdrückung einer zur optischen Achse (101) parallelen Beugungsordnung durch Interferenz, wobei die optische Achse (101) senkrecht zur Gegenstandsebene (103) ist;
Abbilden der Gegenstandsebene (103) in eine Bildebene (107) mittels einer auf der optischen Achse (101) angeordneten und parallel der Linien (112) ausgerichteten Zylinderlinse; und
Anordnen des Werkstücks (108) in der Bildebene (107).

**Claims**

1. Apparatus (100) for ablatively producing a periodic line structure on a workpiece (108), comprising:

a pulsed laser (109) configured to generate ablative light (110);
a phase mask (102) disposed in the beam path of the ablative light (110) and configured to generate by interference a plurality of equidistant parallel lines (112) in an object plane (103) and to suppress a diffraction order parallel to the optical axis (101), the optical axis (101) being perpendicular to the object plane (103);
**characterised by** the following features:

an imaging optic (104) disposed on the optical axis (101) and having a cylindrical lens aligned parallel to the lines (112) and configured to image the object plane (103) into an image plane (107), the imaging optic (104) reducing perpendicular to the equidistant parallel lines (112); and
a support (106) configured to position the workpiece (108) in the image plane (107).

2. Apparatus according to claim 1, wherein the unsuppressed diffraction orders (116, 118) include discrete angles with the optical axis (101) and the cylindrical lens has no acylindrical correction.

3. Apparatus according to claim 1 or 2, wherein the unsuppressed diffraction orders (116, 118) and the imaging optic (104) are symmetrical about the optical axis (101).

4. Apparatus according to any one of claims 1 to 3, wherein the phase mask is configured to generate the plurality of equidistant parallel lines (112) in the object plane (103) over a first width (114-1), and wherein the imaging optic (104) is arranged on the optical axis (101) such that unsuppressed diffraction orders (116, 118) in the imaging optic (104) are spaced from the optical axis (101) over a second width (114-2) corresponding to the first width (114-1).

5. Apparatus according to any one of claims 1 to 4, wherein the workpiece is movably arranged in the image plane (107) perpendicular to the lines (112, 113).

6. Apparatus according to any one of claims 1 to 5, wherein the support (106) is configured to displace the workpiece (108) parallel to the image plane (107) and perpendicular to the imaged equidistant lines (113) at a steady feed rate.

7. Apparatus according to claim 6, wherein a repetition rate, r, of the pulsed laser (109) and the feed rate, v, of the support (106) are synchronised such that

$$v = r \cdot b \cdot n \text{ for an integer } n,$$

where *b* is a periodicity of the imaged equidistant lines (113).

8. Apparatus according to claim 6 or 7, wherein a feed between two successive pulses is an integer fraction of an image side width (115).

9. Apparatus according to any one of claims 1 to 8, further comprising:
an amplitude mask arranged between the imaging optic (104) and the image plane (107).

10. Method of ablatively producing a periodic line structure on a workpiece (108), comprising:

generating ablative light (110) by means of a pulsed laser (109);
disposing a phase mask (102) in the beam path of the ablative light (110) for generating a plurality of equidistant parallel lines (112) in an object plane (103) and for suppressing a diffraction order parallel to the optical axis (101) by interference, wherein the optical axis (101) is perpendicular to the object plane (103);
imaging the object plane (103) into an image plane (107) by means of a cylindrical lens arranged on the optical axis (101) and aligned parallel to the lines (112); and
position the workpiece (108) in the image plane (107).

**Revendications**

1. Dispositif (100) pour la fabrication par ablation d'une structure de lignes périodiques sur une pièce (108), comprenant :

un laser pulsé (109) qui est conçu pour produire une lumière ablative (110) ;
un masque de phase (102) disposé dans le trajet de faisceau de la lumière ablative (110), qui est conçu pour produire une pluralité de lignes parallèles équidistantes (112) dans un plan objet (103) et pour supprimer un ordre de diffraction parallèle à l'axe optique (101) par interférence, l'axe optique (101) étant perpendiculaire au plan objet (103) ;
**caractérisé par** les caractéristiques suivantes :

une optique de reproduction (104) disposée sur l'axe optique (101) et comportant une lentille cylindrique orientée parallèlement aux lignes (112) qui est conçue pour reproduire le plan objet (103) dans un plan image (107), l'optique de reproduction (104) effectuant une réduction perpendiculairement aux lignes parallèles équidistantes (112) ; et
un support (106) conçu pour disposer la pièce (108) dans le plan image (107).

2. Dispositif selon la revendication 1, dans lequel les ordres de diffraction non supprimés (116, 118) forment des angles discrets avec l'axe optique (101) et la lentille cylindrique ne présente pas de correction acylindrique.

3. Dispositif selon la revendication 1 ou 2, dans lequel les ordres de diffraction non supprimés (116, 118) et l'optique de reproduction (104) sont situés symétriquement par rapport à l'axe optique (101).

4. Dispositif selon l'une des revendications 1 à 3, dans lequel le masque de phase est conçu pour produire la pluralité de lignes parallèles équidistantes (112) dans le plan objet (103) sur une première largeur (114-1) et dans lequel l'optique de reproduction (104) est disposée sur l'axe optique (101), de sorte que des ordres de diffraction non supprimés (116, 118) dans l'optique de reproduction (104) sont espacés de l'axe optique (101) sur une deuxième largeur (114-2) correspondant à la première largeur (114-1).

**5.** Dispositif selon l'une des revendications 1 à 4, dans lequel la pièce est disposée mobile perpendiculairement aux lignes (112, 113) dans le plan image (107).

**6.** Dispositif selon l'une des revendications 1 à 5, dans lequel le support (106) est conçu pour déplacer la pièce (108) parallèlement au plan image (107) et perpendiculairement aux lignes équidistantes reproduites (113) à une vitesse d'avance continue.

**7.** Dispositif selon la revendication 6, dans lequel une vitesse de répétition, r, du laser pulsé (109) et la vitesse d'avance, v, du support (106) sont synchronisées de sorte que

$v = r \cdot b \cdot n$ pour un nombre entier *n,*
où *b* est une périodicité des lignes équidistantes reproduites (113).

**8.** Dispositif selon la revendication 6 ou 7, dans lequel une avance entre deux impulsions successives est une fraction entière d'une largeur côté image (115).

**9.** Dispositif selon l'une des revendications 1 à 8, comprenant en outre :
un masque d'amplitude disposé entre l'optique de reproduction (104) et le plan image (107).

**10.** Procédé de fabrication par ablation d'une structure de lignes périodiques sur une pièce (108), comprenant les étapes consistant à :

produire une lumière ablative (110) au moyen d'un laser pulsé (109) ;
disposer un masque de phase (102) dans le trajet de faisceau de la lumière ablative (110) pour produire une pluralité de lignes parallèles équidistantes (112) dans un plan objet (103) et pour supprimer un ordre de diffraction parallèle à l'axe optique (101) par interférence, l'axe optique (101) étant perpendiculaire au plan objet (103) ;
reproduire le plan objet (103) dans un plan image (107) au moyen d'une lentille cylindrique disposée sur l'axe optique (101) et orientée parallèlement aux lignes (112) ; et
disposer la pièce (108) dans le plan image (107).

100

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CA 2281039
- CA A1

- US 20090046757 A

**In der Beschreibung aufgeführte Nicht-Patentliteratur**

- **J. MEINERTZ et al.** Micron and Sub-Micron Gratings on Glass by UV Laser Ablation. *Physics Procedia,* vol. 41, 708-712